# EUROPEAN PATENT APPLICATION

(11) **EP 4 379 242 A1**
(43) Date of publication of application: **05.06.2024**
(21) Application number: 22849245.0
(22) Date of filing: 12.07.2022
(51) Int. Cl.: F16J 15/3204, F16J 15/3232, F16J 15/3268

(54) **SEALING DEVICE**

(30) Priority: 27.07.2021 JP 2021122141; 19.08.2021 JP 2021133882
(71) Applicant: NOK Corporation, Minato-ku Tokyo 105-8585 (JP)
(72) Inventor: TANIDA, Masayuki, Fukushima-shi, Fukushima 960-1193 (JP); YOSHIMURA, Kenichi, Fukushima-shi, Fukushima 960-1193 (JP); WATANABE, Junichi, Fujisawa-shi, Kanagawa 251-0042 (JP); NAGAHAMAYA, Hideaki, Fukushima-shi, Fukushima 960-1193 (JP)
(74) Representative: Global IP Europe Patentanwaltskanzlei
(86) International application number: PCT/JP2022/027437
(87) International publication number: WO 2023/008181

(57) **Abstract**

The present invention addresses the problem of providing a sealing device capable of achieving long-term electrical conductivity between a rotary shaft and a housing at low cost and in a space-saving manner. The problem is solved by a sealing device that is disposed in and seals a gap between an outer surface of a rotary shaft and an inner surface of a housing having a shaft hole into which the rotary shaft is inserted, the inner surface forming the shaft hole, and that can provide electrical conductivity between the housing and the rotary shaft pressed against the inner surface of the housing forming the shaft hole when the rotary shaft rotates.

## Description

### TECHNICAL FIELD

The present invention relates to a sealing device.

### BACKGROUND ART

In general, in an EV (Electric Vehicle) or an HEV (Hybrid Electric Vehicle), a sealing device which is an oil seal is provided between a rotating shaft of a motor and a housing to prevent a lubricant sealed inside from leaking out.

In the EV and HEV as described above, an induced current generated by the motor causes electromagnetic noise and there is concern for adverse effects on electronic devices.

As a conventional method related thereto, for instance, Patent Document 1 describes an oil seal in which an oil lip made of a rubber-like elastic material and a dust lip are adhered to a reinforcing ring having an approximately L-shaped cross-section, wherein: the dust lip is made of woven fabric or non-woven fabric into which an electrically conductive material is incorporated, and at least a part of a fitting surface of the reinforcing ring is exposed. It is also described that such an oil seal ensures electrical conductivity of the housing and the shaft via the dust lip and the reinforcing ring, and therefore a problem of noise generation which is seen in a case where a usual oil seal is used is avoided.

Patent Document 2 describes a sealing device disposed between a rotating shaft connected to a motor and a housing to seal the inside against the outside, the sealing device including: a conductive elastic body part which has lips being slidably in contact with the rotating shaft and is disposed between the rotating shaft and the housing to seal a lubricant inside while suppressing penetration of foreign matter from outside; a conductive reinforcing ring which is integrally formed with the elastic body part and has a conducting surface being in contact with an inner peripheral surface of the housing; and a metal ring for electric conduction which has a first conducting surface being in contact with the elastic body part on the rotating shaft side and a second conducting surface being in contact with the reinforcing ring on the housing side, and which has higher electrical conductivity between the first conducting surface and the second conducting surface than at the elastic body part. It is also described that such a sealing device is capable of achieving smooth conduction between the rotating shaft connected to the motor and the housing at a low cost in a space saving manner.

Patent Document 3 discloses a technique in which a rotating shaft of a motor is electrically connected to a metallic motor housing to allow electromagnetic noise induced in the rotating shaft to escape to the motor housing. In particular, FIG. 4 of Patent Document 3 discloses that a sealing device which is an oil seal disposed between the rotating shaft of the motor and the housing is manufactured with conductive rubber.

### CITATION LIST

### PATENT DOCUMENTS

Patent Document 1: JP 60-167263 U
Patent Document 2: JP 2020-60240 A
Patent Document 3: JP 2000-244180 A

### SUMMARY OF THE INVENTION

### PROBLEM TO BE SOLVED BY THE INVENTION

In a case where an electrically conductive sealing device is disposed around a rotating shaft of a motor taking into consideration that electromagnetic noise is allowed to escape from the rotating shaft to a housing, it is desirable to ensure contact between the electrically conductive sealing device and the rotating shaft made of metal or the like, and contact between the sealing device and the housing made of metal or the like. The same goes for the case where an electrically conductive sealing device is disposed around a rotating shaft of a generator. The same also goes for the case where an electrically conductive sealing device is disposed around a rotating shaft rotated by the rotating shaft of the motor and a rotating shaft rotated by the rotating shaft of the generator.

The present invention provides a sealing device capable of achieving conduction between a rotating shaft and a housing at a low cost in a space saving manner for an extended period of time.

### MEANS FOR SOLVING THE PROBLEM

The inventors of the present invention have made an intensive study to solve the problems described above and completed the present invention.

The present invention provides the following (1) to (10).
(1) A sealing device disposed in a gap between an outer surface of a rotating shaft and an inner surface constituting a shaft hole in a housing having the shaft hole in which the rotating shaft is to be inserted, and configured to seal the gap,
   wherein rotation of the rotating shaft causes the sealing device to be pressed against the inner surface constituting the shaft hole in the housing and the sealing device is capable of conduction between the rotating shaft and the housing.
(2) The sealing device according to (1) above, including:
   an annular sleeve tube part fixed to the outer surface of the rotating shaft; and
   a conduction part having a ring shape, a ring outer peripheral portion being in contact with the inner surface of the housing, and its main surface being fixed to the sleeve tube part.
(3) The sealing device according to (2) above, wherein centrifugal force generated by the rotation of the rotating shaft causes force with which the conduction part is pressed against the inner surface of the housing to be increased.
(4) The sealing device according to (1) above, including:
   a cylindrical portion into which the rotating shaft is to be fitted;
   a flange extending radially outward from the cylindrical portion; and
   at least one lip extending further radially outward from the flange to be slidably in contact with an inner peripheral surface of the shaft hole of the housing,
   wherein the cylindrical portion and the flange are made of at least one of metal and conductive rubber, and the lip is made of conductive rubber.
(5) The sealing device according to (1) above, including:
   an annular sleeve tube part which has a fixing portion fixed to the outer surface of the rotating shaft and extending in a direction of an axis of the rotating shaft and a support portion connected to an end of the fixing portion and extending in a direction approaching the inner surface of the housing;
   a conduction part having a ring shape, a ring outer peripheral portion being in contact with the inner surface of the housing, and its main surface being fixed to the support portion of the sleeve tube part; and
   a sealing part including: an annular attaching portion attached to the inner surface of the housing and made of an elastic body; a lip portion being slidably in contact with the outer surface of the rotating shaft and/or the fixing portion of the sleeve tube part and made of an elastic body; a connecting portion connecting the attaching portion and the lip portion to each other and made of an elastic body; and a reinforcing ring closely attached to an inner surface of the attaching portion and also closely attached to the connecting portion, the sealing part being configured to seal a lubricant located inside while suppressing penetration of foreign matter from outside.
(6) The sealing device according to (5) above, wherein a ring inner peripheral portion of the conduction part is in contact with the outer surface of the rotating shaft.
(7) The sealing device according to (5) or (6) above, wherein the conduction part is made of conductive non-woven fabric.
(8) The sealing device according to any one of (5) to (7) above, wherein in the gap between the outer surface of the rotating shaft and the inner surface of the housing, the conduction part, the sleeve tube part and the sealing part are disposed in this order from outside toward inside in the direction of the axis of the rotating shaft.
(9) The sealing device according to any one of (5) to (8) above, wherein the conduction part has a plurality of slits at the ring outer peripheral portion.
(10) The sealing device according to any one of (5) to (9) above, wherein the fixing portion and the support portion in the sleeve tube part are approximately perpendicular to each other in a cross-section in a direction parallel to the axis of the rotating shaft.

### EFFECT OF THE INVENTION

The present invention can provide a sealing device capable of achieving conduction between a rotating shaft and a housing at a low cost in a space saving manner for an extended period of can be further reduced time.

### BRIEF DESCRIPTION OF THE DRAWINGS

[FIG. 1] FIG. 1 is a diagram showing a power transmission system of an electric vehicle having a conductive unit according to an embodiment of the invention.
[FIG. 2] FIG. 2 is a diagram showing a power transmission system of another electric vehicle having the conductive unit according to the embodiment of the invention.
[FIG. 3] FIG. 3 is a schematic cross-sectional view showing a preferred embodiment of a sealing device of the invention.
[FIG. 4] FIG. 4 is a schematic cross-sectional view showing another preferred embodiment of the sealing device of the invention.
[FIG. 5] FIG. 5 is a schematic cross-sectional view showing still another preferred embodiment of the sealing device of the invention.
[FIG. 6] FIG. 6 is a schematic cross-sectional view showing yet another preferred embodiment of the sealing device of the invention.
[FIG. 7] FIG. 7 is a cross-sectional view showing still yet another embodiment of the sealing device of the invention.
[FIG. 8] FIG. 8 is a cross-sectional view showing yet still another embodiment of the sealing device of the invention.
[FIG. 9] FIG. 9 is a cross-sectional view showing another use of the sealing device in FIG. 7.
[FIG. 10] FIG. 10 is a cross-sectional view showing another use of the sealing device in FIG. 8.
[FIG. 11] FIG. 11 is a schematic cross-sectional view showing a further preferred embodiment of the sealing device of the invention.
[FIG. 12] FIG. 12 is a schematic plan view of a conduction part included in the preferred embodiment of the sealing device of the invention shown in FIG. 11.

### DESCRIPTION OF EMBODIMENTS

The present invention is now described.

The invention provides a sealing device disposed in a gap between an outer surface of a rotating shaft and an inner surface constituting a shaft hole in a housing having the shaft hole in which the rotating shaft is to be inserted, and configured to seal the gap, wherein rotation of the rotating shaft causes the sealing device to be pressed against the inner surface constituting the shaft hole in the housing and the sealing device is capable of conduction between the rotating shaft and the housing.

Such a sealing device is hereinafter referred to also as the "sealing device of the invention."

The sealing device of the invention is preferably attached to the outer surface of the rotating shaft. In this case, rotation of the rotating shaft causes centrifugal force to be applied to the sealing device of the invention, and the sealing device of the invention is therefore pressed against the inner surface of the housing.

As a result, the sealing device of the invention is closely attached to the inner surface of the housing in a stable manner to ensure conduction and sealing between the rotating shaft and the housing.

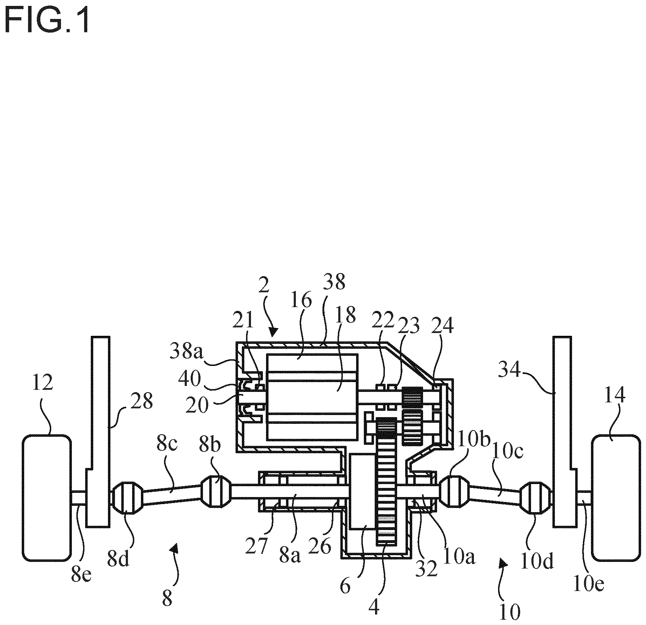

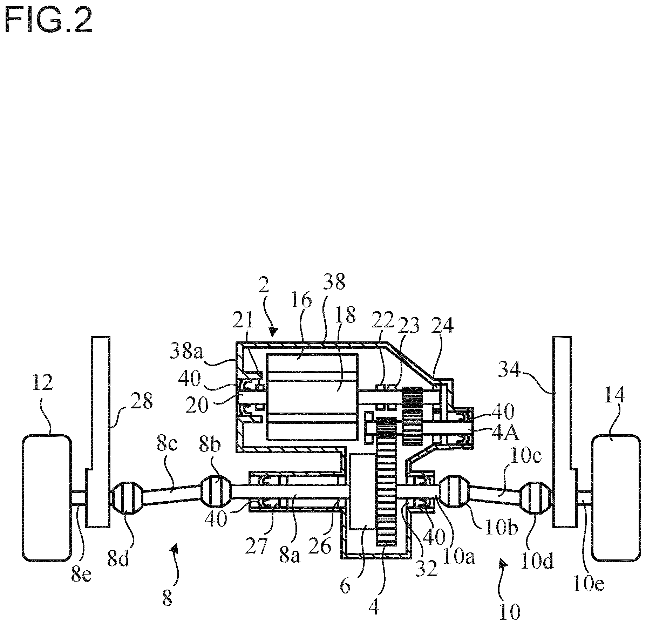

A part in which the sealing device of the invention may be used is first described with reference to FIG. 1 and FIG. 2.

Some embodiments according to the invention will be described below with reference to the accompanying drawings (FIG. 1, FIG. 2 and other drawings) but the scales of the drawings are not necessarily correct but some characteristics are sometimes emphasized or omitted.

As shown in FIG. 1, a power transmission system of an electric vehicle including a sealing device 40 according to an embodiment (sealing device of the invention) has an electric motor (motor) 2, a gear train 4, a differential gear unit 6, a left axle structure 8, a right axle structure 10, a left drive wheel 12, and a right drive wheel 14.

The motor 2 has a stator 16 and a rotor 18, and a rotating shaft 20 is fixed to the rotor 18. The rotating shaft 20 is made of metal such as cast iron, steel, or an aluminum alloy, and is rotatably supported by bearings 21 to 24. Rotation of the rotating shaft 20 is transmitted to the differential gear unit 6 by the gear train 4 or the gear reducer. The differential gear unit 6 rotates the axle structures 8 and 10 while distributing torque to the right and left axle structures 8 and 10 in accordance with loads acting on the right and left drive wheels 12 and 14.

The left axle structure 8 has a shaft 8a, a universal joint 8b, a shaft 8c, a universal joint 8d, and an axle 8e. The differential gear unit 6 rotates the shaft 8a, and the rotation is transmitted via the universal joint 8b, the shaft 8c and the universal joint 8d to the axle 8e to which the left drive wheel 12 is fixed. The left axle structure 8 is supported by bearings 26 and 27 rotatably supporting the shaft 8a, and a suspension mechanism 28 rotatably supporting the axle 8e.

The right axle structure 10 has a shaft 10a, a universal joint 10b, a shaft 10c, a universal joint 10d, and an axle 10e. The differential gear unit 6 rotates the shaft 10a, and the rotation is transmitted via the universal joint 10b, the shaft 10c and the universal joint 10d to the axle 10e to which the right drive wheel 14 is fixed. The right axle structure 10 is supported by a bearing 32 rotatably supporting the shaft 10a, and a suspension mechanism 34 rotatably supporting the axle 10e.

The motor 2, the gear train 4, the differential gear unit 6, and the shafts 8a and 10a are disposed within a common housing 38. The housing 38 is made of metal such as cast iron, steel, or an aluminum alloy.

The sealing device 40 which is annular in shape is disposed around one end of the rotating shaft 20 of the motor 2, the sealing device being disposed over the whole of a gap between an end 38a of the metallic housing 38 and the rotating shaft 20. The sealing device 40 is fixed to the rotating shaft 20 and is in contact with an inner peripheral surface of a shaft hole at the end 38a of the housing 38.

The sealing device 40 according to the above embodiment is disposed around the rotating shaft 20 of the motor 2. However, the sealing device 40 may be disposed around the rotating shaft (shaft 8a or 10a) which is rotated by the rotating shaft 20 of the motor 2 via the power transmission mechanism (for example, the gear train 4 and the differential gear unit 6). For example, as shown in FIG. 2, the sealing device 40 may be disposed in a gap between the housing 38 and the shaft 8a or in a gap between the housing 38 and the shaft 10a. Further, the sealing device 40 may be disposed in a gap between a rotating shaft 4A of an intermediate gear of the gear train 4 and the housing 38. A sealing device 80 to be described later may further be disposed near the sealing device 40.

Alternatively, the sealing device 40 may be disposed in a gap between a rotating shaft of a generator where a lubricant is used and a housing of the rotating shaft. Still alternatively, the sealing device 40 may be disposed in a gap between a rotating shaft for rotating the rotating shaft of the generator and its housing.

A sealing device in another embodiment (for example, a sealing device 60 or a sealing device 201 to be described later) which corresponds to the sealing device of the invention may also be disposed at the above portions instead of the sealing device 40.

The sealing device of the invention is preferably in an embodiment having a sleeve tube part and a conduction part. Specifically, the sealing device of the invention is preferably in an embodiment including an annular sleeve tube part fixed to the outer surface of the rotating shaft and a ring-shaped conduction part in which a ring outer peripheral portion is in contact with the inner surface of the housing and of which a main surface is fixed to the sleeve tube part.

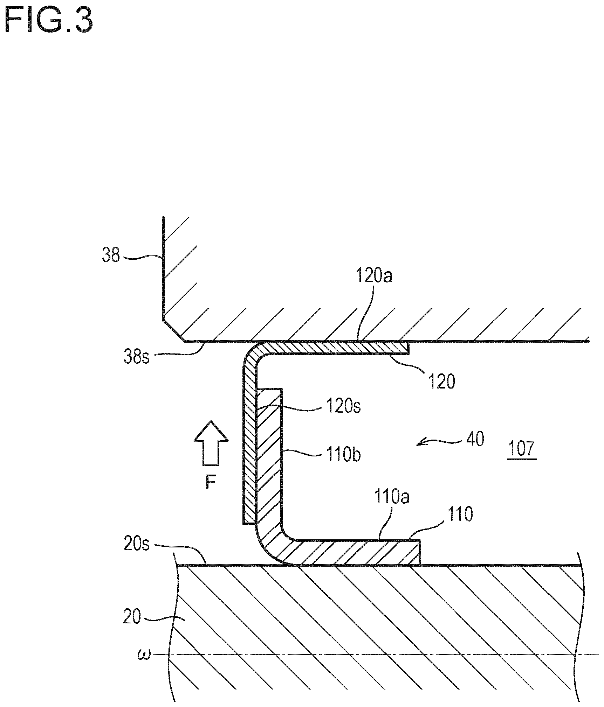

Such preferred embodiments of the sealing device of the invention are now described with reference to FIG. 3 to FIG. 6.

The sealing devices 40 shown in FIG. 3 to FIG. 6 correspond to the preferred embodiments of the sealing device of the invention.

Each of FIG. 3 to FIG. 6 is a schematic view (schematic cross-sectional view) of a cross-section obtained by cutting, along a plane containing an axis ω of the rotating shaft 20, the sealing device 40 according to each preferred embodiment, the rotating shaft 20 and the housing 38.

In FIG. 3 to FIG. 6, each sealing device 40 is disposed in a gap 107 between an outer surface 20s of the rotating shaft 20 and an inner surface 38s constituting a shaft hole in the housing 38 having the shaft hole in which the rotating shaft 20 is inserted.

As described above, an example of the rotating shaft 20 is a motor shaft of a drive motor in an EV (Electric Vehicle) or an HEV (Hybrid Electric Vehicle). In general, the rotating shaft 20 has a rod shape (column shape) and its cross-section is usually circular in shape.

The housing 38 is usually grounded.

Each of the sealing devices 40 in the preferred embodiments shown in FIG. 3 to FIG. 6 includes a sleeve tube part 110 and a conduction part 120.

### <Sleeve Tube Part>

The sleeve tube part 110 included in each of the sealing devices 40 shown in FIG. 3 to FIG. 6 is now described.

The sleeve tube part 110 is an annular part directly or indirectly fixed to the outer surface 20s of the rotating shaft 20.

In FIG. 3, FIG. 5, and FIG. 6, the sleeve tube part 110 is directly fixed to the outer surface 20s of the rotating shaft 20.

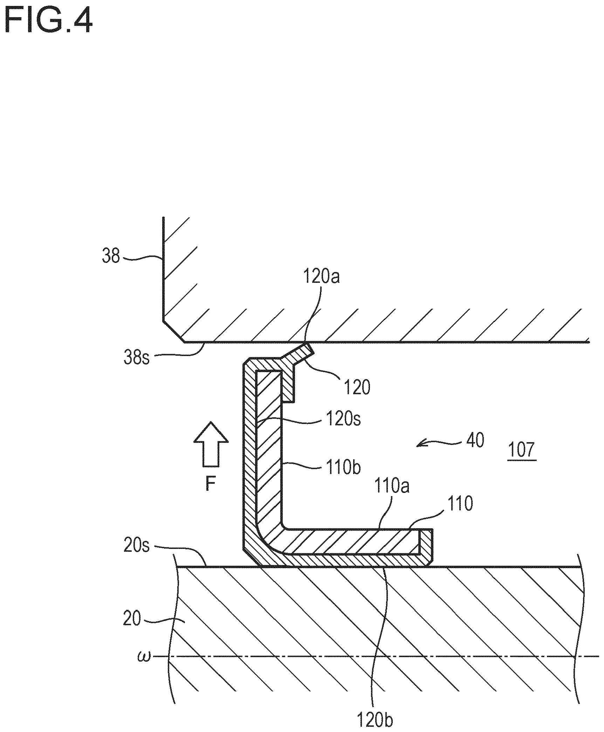

In FIG. 4, the sleeve tube part 110 is fixed to the outer surface 20s of the rotating shaft 20 via the conduction part 120 to be described later. In other words, the sleeve tube part 110 is indirectly fixed to the outer surface 20s of the rotating shaft 20. In the embodiment shown in FIG. 4, the conduction part 120 encloses a part of the sleeve tube part 110.

There is no particular limitation on the means for fixing the sleeve tube part 110 to the outer surface 20s of the rotating shaft 20. For example, the sleeve tube part 110 may be fixed to the outer surface 20s of the rotating shaft 20 by fitting the sleeve tube part 110 onto the outer surface 20s of the rotating shaft 20 by a tight fitting process.

Alternatively, the sleeve tube part 110 may be fixed to the outer surface 20s of the rotating shaft 20 with the use of an adhesive or the like.

The sleeve tube part 110 preferably includes, as shown in FIG. 3 to FIG. 6, a fixing portion 110a extending in a direction parallel to the axis ω of the rotating shaft 20, and a support portion 110b connected to an end of the fixing portion 110a and extending in a direction approaching the inner surface 38s of the housing 38.

Each of the fixing portion 110a and the support portion 110b is preferably in the form of a plate as in the embodiments shown in FIG. 3 to FIG. 6. In other words, preferably, the fixing portion 110 is in a cylindrical shape and the support portion 110b is in the shape of a disk having a through-hole at the center.

As in the embodiments shown in FIG. 3 to FIG. 6, the fixing portion 110a and the support portion 110b are preferably approximately perpendicular to each other in a cross-section obtained by cutting along a plane containing the axis ω of the rotating shaft 20.

In the preferred embodiments shown in FIG. 3 to FIG 6, the fixing portion 110a and the support portion 110b are approximately perpendicular to each other in the cross-section obtained by cutting along the plane containing the axis ω of the rotating shaft 20. Therefore, the sleeve tube part 110 in each of the preferred embodiments shown in FIG. 3 to FIG. 6 has an approximately L-shaped cross-section.

"Approximately perpendicular to each other" as used herein means that they are not completely perpendicular to each other. That is, in FIG. 3 to FIG. 6, the fixing portion 110a and the support portion 110b preferably form an angle of 90° therebetween but this angle may be 75° to 105°, (preferably 80° to 100°, and more preferably 85° to 95°).

The sleeve tube part 110 preferably has electrical conductivity.

In a case where a ring inner peripheral portion 120b of the conduction part 120 to be described later is not in contact with the outer surface 20s of the rotating shaft 20, the sleeve tube part 110 definitely has electrical conductivity.

On the other hand, in a case where the ring inner peripheral portion 120b of the conduction part 120 to be described later is in contact with the outer surface 20s of the rotating shaft 20, the sleeve tube part 110 may not necessarily have electrical conductivity.

The sleeve tube part 110 is preferably made of metal and more preferably metal having electrical conductivity. Examples of the metal include stainless steel, cold rolled steel (SPCC), brass, and aluminum.

The sleeve tube part 110 may not be made of metal. The sleeve tube part may be made of, for example, resin.

The sleeve tube part 110 can be formed by press working or forging.

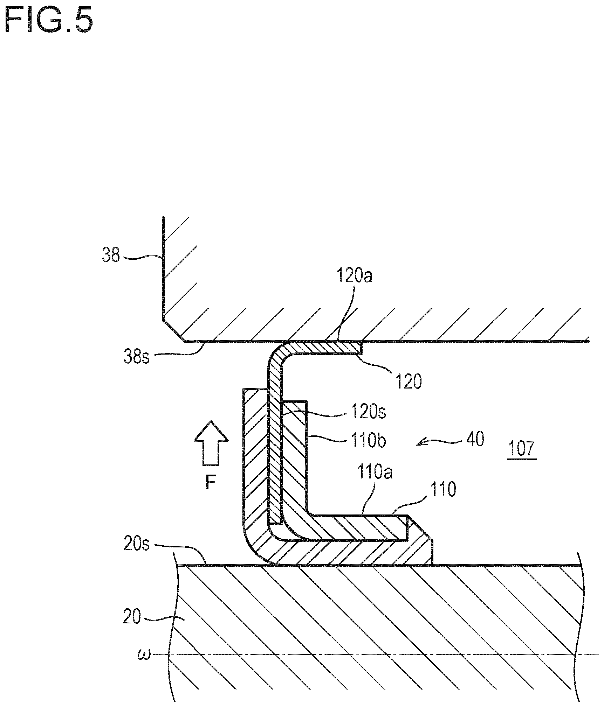

The number of the sleeve tube parts 110 is not limited. For example, in the embodiment shown in FIG. 5, two sleeve tube parts are stacked on top of each other and the conduction part 120 is sandwiched therebetween.

### <Conduction Part>

The conduction part 120 included in each of the sealing devices 40 shown in FIG. 3 to FIG. 6 is now described.

The conduction part 120 has a ring shape, a ring outer peripheral portion 120a is in contact with the inner surface 38s of the housing 38, and its main surface 120s is fixed to the sleeve tube part 110.

As in the embodiments shown in FIG. 3 to FIG. 6, the main surface 120s of the conduction part 120 is preferably fixed to the support portion 110b of the sleeve tube part 110.

As in the embodiments shown in FIG. 3, FIG. 5, and FIG. 6, the conduction part 120 preferably has a sheet or plate shape, and has flexibility or elasticity to be easily deformable, as will be described later.

The conduction part 120 shown in each of FIG. 3, FIG. 5, and FIG. 6 is deformed so as to have an approximately L-shaped cross-section. The main surface 120s of the conduction part 120 is attached to a main surface of the plate-shaped support portion 110b in the sleeve tube part 110. The main surface 120s of the conduction part 120 is preferably closely attached to the main surface of the support portion 110b.

The main surface 120s at the ring outer peripheral portion 120a is attached to the inner surface 38a of the housing 38. The main surface 120s at the ring outer peripheral portion 120a is preferably closely attached to the inner surface 38a of the housing 38 by centrifugal force applied to the sealing device 40 through rotation of the rotating shaft 20.

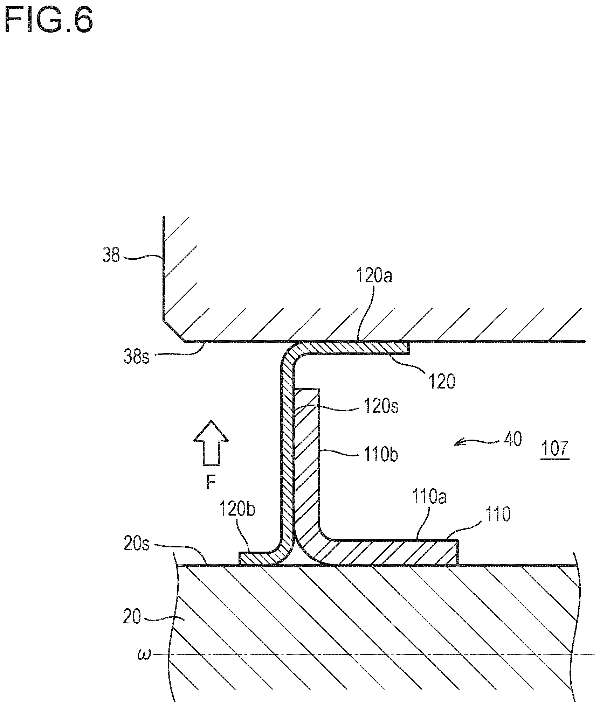

In the embodiment shown in FIG. 6, the main surface 120s at the ring inner peripheral portion 120b of the conduction part 120 is attached to the outer surface 20s of the rotating shaft 20.

In the conduction part 120 shown in each of FIG. 3, FIG. 5, and FIG. 6 which is deformed so as to have an approximately L-shaped cross-section, the ring outer peripheral portion 120a has a cylindrical shape, and the other portion has the shape of a disk having a through-hole at the center.

Centrifugal force F generated by rotation of the rotating shaft 20 preferably causes force with which the conduction part 120 is pressed against the inner surface 38s of the housing 38 to be increased compared to that before the rotation of the rotating shaft 20.

In each of the preferred embodiments shown in FIG. 3 to FIG. 6, rotation of the rotating shaft 20 causes centrifugal force F to be applied to the conduction part 120, whereby the ring outer peripheral portion 120a of the conduction part 120 is pressed against the inner surface 38s of the housing 38. As a result, the ring outer peripheral portion 120a of the conduction part 120a is closely attached to the inner surface 38s of the housing 38 in a stable manner to ensure conduction between the rotating shaft 20 and the housing 38.

In the conduction part 120 in each of the preferred embodiments shown in FIG. 4 and FIG. 6, the ring inner peripheral portion 120b in the conduction part 120 is in contact with the outer surface 20s of the rotating shaft 20. In each of the preferred embodiments shown in FIG. 4 and FIG. 6, the ring outer peripheral portion 120a of the conduction part 120 is attached to the main surface 20s of the rotating shaft 20.

The ring inner peripheral portion 120b of the conduction part 120 is thus preferably in contact with the outer surface 20b of the rotating shaft 20 because this facilitates conduction between the rotating shaft 20 and the housing 38. In this case, even when the above-described sleeve tube part 110 does not have electrical conductivity, the conduction between the rotating shaft 20 and the housing 38 is established.

The method of fixing the main surface 120s of the conduction part 120 to the main surface of the support portion 110b of the sleeve tube part 110 is not particularly limited but they may be fixed together with, for example, an adhesive. However, it is preferred to fix them together not with an adhesive but with metallic bolts and nuts because conduction between the conduction part 120 and the sleeve tube part 110 is easily ensured, consequently leading to easy conduction between the rotating shaft 20 and the housing 38.

The conduction part 120 preferably has electrical conductivity and flexibility. The conduction part 120 may be made of a material containing a rubber material such as nitrile rubber (NBR), hydrogenated nitrile rubber (H-NBR), acrylic rubber (ACM) or fluoro rubber (FKM) and conductive powder dispersed in the rubber material such as conductive carbon black powder or metallic powder.

The conduction part 120 may be made of conductive woven fabric or conductive non-woven fabric.

Exemplary materials that can be illustrated for the conductive non-woven fabric or conductive woven fabric include copper, silver, iron, and carbon.

The sealing device of the invention preferably includes a cylindrical portion into which the rotating shaft is to be fitted; a flange extending radially outward from the cylindrical portion; and at least one lip extending further radially outward from the flange to be slidably in contact with the inner peripheral surface of the shaft hole of the housing, wherein the cylindrical portion and the flange are made of at least one of metal and conductive rubber, and the lip is made of conductive rubber.

The sealing device 40 and the sealing device 60 corresponding to examples of such a preferred embodiment are described with reference to FIG. 6 to FIG. 10.

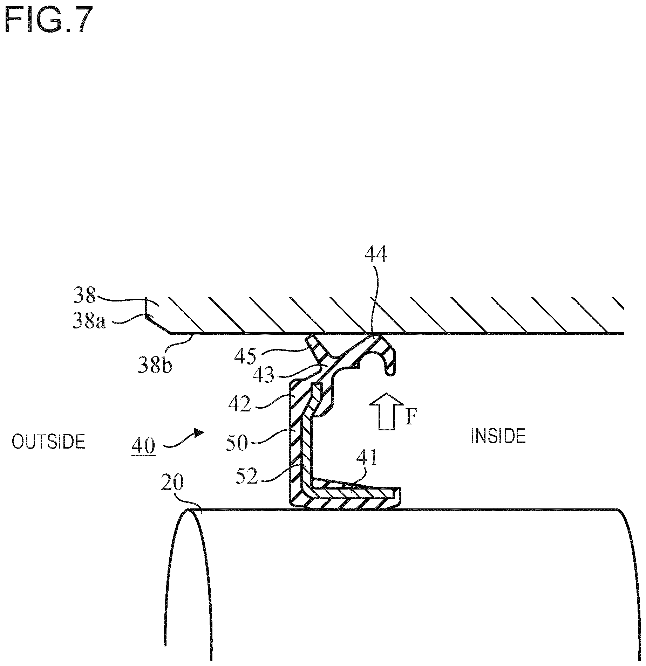

FIG. 7 only shows the cylindrical rotating shaft 20, the annular sealing device 40 and the upper half of the cylindrical end 38a of the housing 38. In this example, the sealing device 40 is a sealing device (oil seal) configured to seal a gap between the inner peripheral surface of a shaft hole 38b at the end 38a of the housing 38 and the rotating shaft 20. The sealing device 40 includes a cylindrical portion 41, a flange 42, an annular portion 43, a sealing lip 44, and a dust lip 45.

The rotating shaft 20 of the motor 2 is fitted into the cylindrical portion 41 by the tight fitting process. Therefore, the sealing device 40 is fixed to the rotating shaft 20 and rotates with the rotating shaft 20. The flange 42 is a circular plate extending radially outward from the cylindrical portion 41. The annular portion 43 is formed at the outer edge of the flange 42.

The sealing lip 44 extends further radially outward from the annular portion 43 to be slidably in contact with the inner peripheral surface of the shaft hole 38b at the end 38a of the housing 38. The sealing lip 44 seals so that a lubricant for lubricating the motor 2 disposed inside the housing 38 is not leaked outside the housing 38.

The dust lip 45 also extends further radially outward from the annular portion 43 to be slidably in contact with the inner peripheral surface of the shaft hole 38b at the end 38a of the housing 38. The dust lip 45 suppresses penetration of foreign matter from outside to inside the housing 38.

The sealing device 40 has an elastic ring 50 and a rigid ring 52 made of a rigid material, for example, metal. The rigid ring 52 has an approximately L-shaped cross-section and is buried in the elastic ring 50 to reinforce the elastic ring 50.

The cylindrical portion 41 and the flange 42 are made up of the elastic ring 50 and the rigid ring 52, and the annular portion 43, the sealing lip 44, and the dust lip 45 are only made up of the elastic ring 50.

The elastic ring 50 is made of conductive rubber. The conductive rubber contains a rubber material such as nitrile rubber (NBR), hydrogenated nitrile rubber (H-NBR), acrylic rubber (ACM) or fluoro rubber (FKM), and conductive powder dispersed in the rubber material such as conductive carbon black powder or metallic powder.

Therefore, the sealing device 40 is made of a conductive material in the entire radial direction to electrically connect the rotating shaft 20 to the housing 38. Therefore, electromagnetic noise induced in the rotating shaft 20 can be allowed to escape to the housing 38. Particularly in this example, the sealing device 40 is fixed to the rotating shaft 20 and rotates with the rotating shaft 20. The sealing lip 44 and the dust lip 45 extend radially outward and therefore, when the rotating shaft 20 rotates, they are pressed against the inner peripheral surface of the shaft hole 38b of the housing 38 by the action of centrifugal force F.

The housing 38 has in its interior the lubricant for lubricating the motor 2, and the lubricant may form an oil film between the sealing lip 44 and the inner peripheral surface of the shaft hole 38b of the housing 38. In some cases, the lubricant may also form an oil film between the dust lip 45 and the inner peripheral surface of the shaft hole 38b of the housing 38. However, since the sealing lip 44 and the dust lip 45 are pressed against the inner peripheral surface of the shaft hole 38b of the housing 38 by the action of centrifugal force F, an oil film is less likely to be formed between the lip and the housing 38, and even when an oil film is formed, its thickness is small. Therefore, electrical resistance of the oil film is small and electromagnetic noise is allowed to escape from the rotating shaft 20 to the housing 38 with high reliability.

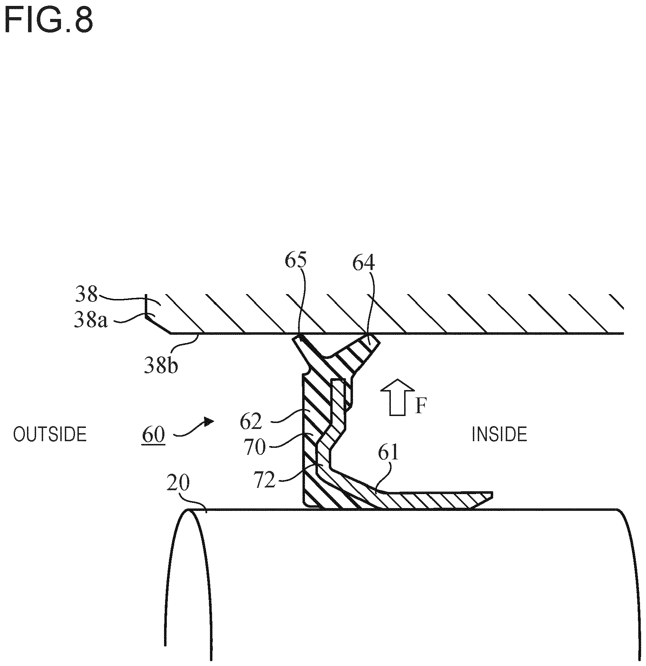

As shown in FIG. 8, the sealing device 60 with another shape which corresponds to the sealing device of the invention may be used. In this example, the sealing device 60 is a sealing device (oil seal) configured to seal a gap between the inner peripheral surface of the shaft hole 38b at the end 38a of the housing 38 and the rotating shaft 20. FIG. 8 only shows the cylindrical rotating shaft 20, the annular sealing device 60 and the upper half of the cylindrical end 38a of the housing 38. The sealing device 60 includes a cylindrical portion 61, a flange 62, a sealing lip 64, and a dust lip 65.

The rotating shaft 20 of the motor 2 is fitted into the cylindrical portion 61 by the tight fitting process. Therefore, the sealing device 60 is fixed to the rotating shaft 20 and rotates with the rotating shaft 20. The flange 62 is a circular plate extending radially outward from the cylindrical portion 61.

The sealing lip 64 extends further radially outward from the outer edge of the flange 62 to be slidably in contact with the inner peripheral surface of the shaft hole 38b at the end 38a of the housing 38. The sealing lip 64 seals so that the lubricant for lubricating the motor 2 disposed inside the housing 38 is not leaked outside the housing 38.

The dust lip 65 also extends further radially outward from the outer edge of the flange 62 to be slidably in contact with the inner peripheral surface of the shaft hole 38b at the end 38a of the housing 38. The dust lip 65 suppresses penetration of foreign matter from outside to inside the housing 38.

The sealing device 60 has an elastic ring 70 and a rigid ring 72 made of a rigid material, for example, metal. The rigid ring 72 has an approximately L-shaped cross-section and is closely attached to the elastic ring 70 to reinforce the elastic ring 70.

The cylindrical portion 61 and the flange 62 are made up of the elastic ring 70 and the rigid ring 72, and the sealing lip 64 and the dust lip 65 are only made up of the elastic ring 70.

The elastic ring 70 is made of conductive rubber as with the above-described elastic ring 50 (see FIG. 7).

Therefore, the sealing device 60 is made of a conductive material in the entire radial direction to electrically connect the rotating shaft 20 to the housing 38. Therefore, electromagnetic noise induced in the rotating shaft 20 can be allowed to escape to the housing 38. Particularly in this example, the sealing device 60 is fixed to the rotating shaft 20 and rotates with the rotating shaft 20. The sealing lip 64 and the dust lip 65 extend radially outward and therefore, when the rotating shaft 20 rotates, they are pressed against the inner peripheral surface of the shaft hole 38b of the housing 38 by the action of centrifugal force F.

The housing 38 has in its interior the lubricant for lubricating the motor 2, and the lubricant may form an oil film between the sealing lip 64 and the inner peripheral surface of the shaft hole 38b of the housing 38. In some cases, the lubricant may also form an oil film between the dust lip 65 and the inner peripheral surface of the shaft hole 38b of the housing 38. However, since the sealing lip 64 and the dust lip 65 are pressed against the inner peripheral surface of the shaft hole 38b of the housing 38 by the action of centrifugal force F, an oil film is less likely to be formed between the lip and the housing 38, and even when an oil film is formed, its thickness is small. Therefore, electrical resistance of the oil film is small and electromagnetic noise is allowed to escape from the rotating shaft 20 to the housing 38 with high reliability.

In this example, the rigid ring 72 made of metal is in surface contact with the outer peripheral surface of the rotating shaft 20 at the cylindrical portion 61. Therefore, electromagnetic noise is allowed to escape from the rotating shaft 20 to the housing 38 with higher reliability.

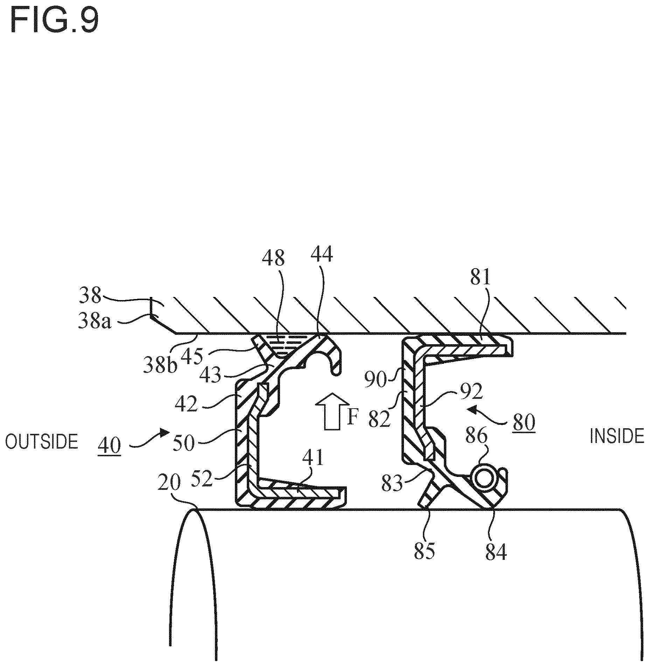

FIG. 9 shows another embodiment of the sealing device 40 in FIG. 7. The sealing device (oil seal) 80 is provided at the back of the sealing device 40 inside the housing 38. Therefore, the sealing device 40 is an auxiliary sealing device (dust sealing device) of the sealing device 80. The sealing device 40 plays a role in allowing electromagnetic noise to escape from the rotating shaft 20 to the housing 38.

Grease serving as the lubricant is preferably placed in a space 48 between the sealing lip 44 and the dust lip 45 in the sealing device 40. This grease preferably has high electrical conductivity.

The sealing device 80 includes a cylindrical portion 81, a disk portion 82, an annular portion 83, a sealing lip 84, and a dust lip 85.

The cylindrical portion 81 is fitted into the shaft hole 38b of the housing 38 by the tight fitting process. Therefore, the sealing device 80 is fixed to the housing 38. The disk portion 82 extends radially inward from the cylindrical portion 81. The annular portion 83 is formed at the inner edge of the disk portion 82.

The sealing lip 84 extends further radially inward from the annular portion 83 to be slidably in contact with the outer peripheral surface of the rotating shaft 20 of the motor 2. The sealing lip 84 seals so that the lubricant for lubricating the motor 2 disposed inside the housing 38 is not leaked outside the housing 38.

A garter spring 86 is disposed radially inside the sealing lip 84 although it is not essential. The garter spring 86 presses the sealing lip 84 against the outer peripheral surface of the rotating shaft 20.

The dust lip 85 also extends further radially inward from the annular portion 83 to be slidably in contact with the outer peripheral surface of the rotating shaft 20. The dust lip 85 suppresses penetration of foreign matter from outside to inside the housing 38.

The sealing device 80 has an elastic ring 90 and a rigid ring 92 made of a rigid material, for example, metal. The rigid ring 92 has an approximately L-shaped cross-section and is buried in the elastic ring 90 to reinforce the elastic ring 90.

The cylindrical portion 81 and the disk portion 82 are made up of the elastic ring 90 and the rigid ring 92, and the annular portion 83, the sealing lip 84, and the dust lip 85 are only made up of the elastic ring 90.

The elastic ring 90 is made of a rubber material. The elastic ring 90 may be made of conductive rubber as with the elastic ring 50 of the sealing device 40.

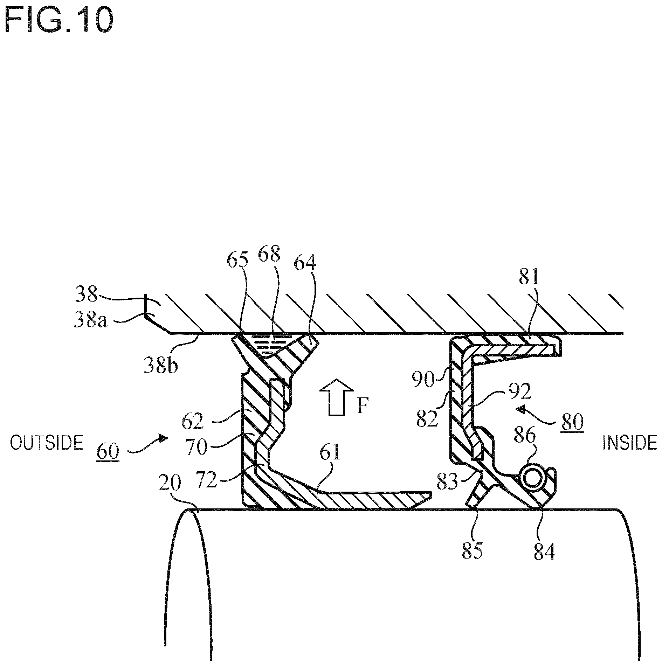

FIG. 10 shows another embodiment of the sealing device 60 in FIG. 8. The sealing device (oil seal) 80 is provided at the back of the sealing device 60 inside the housing 38. Therefore, the sealing device 60 is an auxiliary sealing device (dust sealing device) of the sealing device 80. The sealing device 60 plays a role in allowing electromagnetic noise to escape from the rotating shaft 20 to the housing 38.

Grease serving as the lubricant is preferably placed in a space 68 between the sealing lip 64 and the dust lip 65 in the sealing device 60. This grease preferably has high electrical conductivity.

While the invention has been described by illustrating the sealing devices 40 and 60 corresponding to the sealing devices of the invention with reference to the preferred embodiments of the invention, a person skilled in the art would understand that the form and details may be varied without departing from the spirit and scope of the invention as defined by the claims. Such changes, alterations and modifications are intended to be included in the spirit and scope of the invention.

For example, the lip shape is not limited to ones in the above-described embodiments.

A still another preferred embodiment of the sealing device of the invention is now described.

The sealing device of the invention is preferably a sealing device disposed in a gap between an outer surface of a rotating shaft and an inner surface constituting a shaft hole in a housing having the shaft hole in which the rotating shaft is to be inserted, and configured to seal the gap, the sealing device including: an annular sleeve tube part which has a fixing portion fixed to the outer surface of the rotating shaft and extending in a direction of an axis of the rotating shaft and a support portion connected to an end of the fixing portion and extending in a direction approaching the inner surface of the housing; a conduction part having a ring shape, a ring outer peripheral portion being in contact with the inner surface of the housing, and its main surface being fixed to the support portion of the sleeve tube part; and a sealing part including: an annular attaching portion attached to the inner surface of the housing and made of an elastic body; a lip portion being slidably in contact with the outer surface of the rotating shaft and/or the fixing portion of the sleeve tube part and made of an elastic body; a connecting portion connecting the attaching portion and the lip portion to each other and made of an elastic body; and a reinforcing ring closely attached to an inner surface of the attaching portion and also closely attached to the connecting portion, the sealing part being configured to seal a lubricant located inside while suppressing penetration of foreign matter from outside, the sealing device being capable of conduction between the rotating shaft and the housing.

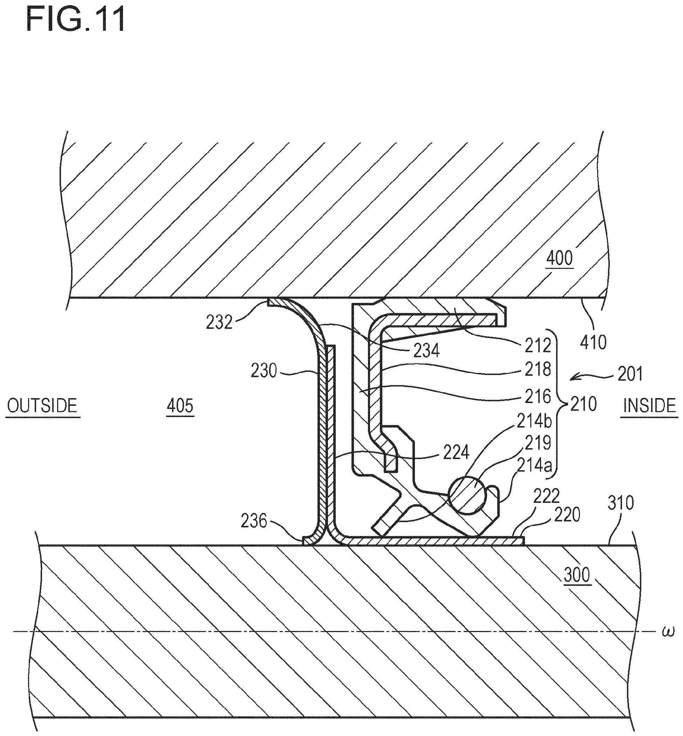

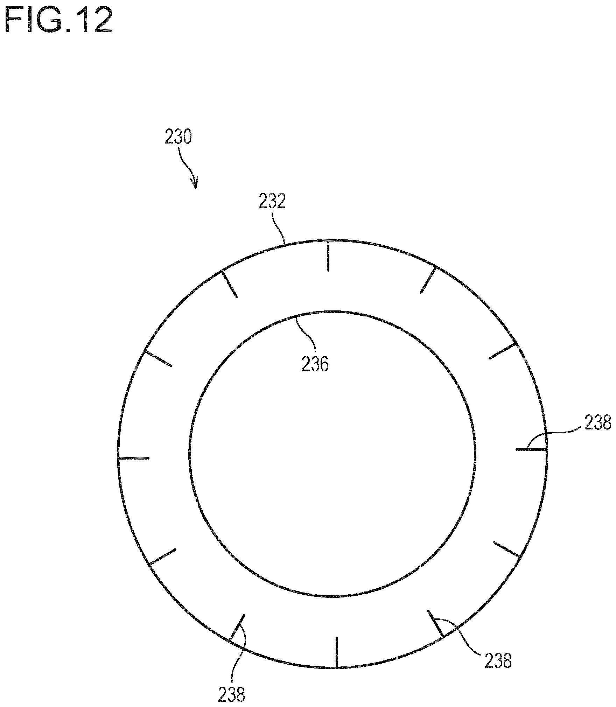

Such a preferred embodiment of the sealing device of the invention (sealing device 201 of the invention) is now described with reference to FIG. 11 and FIG. 12.

The sealing device of the invention shown in FIG. 11 and FIG. 12 is an (illustrative) preferred embodiment and the sealing device of the invention is not limited to the embodiment shown in the drawings.

FIG. 11 is a schematic view (schematic cross-sectional view) of a cross-section obtained by cutting, along a plane containing the axis ω of the rotating shaft, the sealing device of the invention as well as the rotating shaft and the housing.

In FIG. 11, the sealing device 201 of the invention is disposed in a gap 405 between an outer surface 310 of a rotating shaft 300 and an inner surface 410 constituting a shaft hole in a housing 400 having the shaft hole in which the rotating shaft 300 is to be inserted.

An example of the rotating shaft 300 is a motor shaft of a drive motor in an EV (Electric Vehicle) or an HEV (Hybrid Electric Vehicle). In general, the rotating shaft 300 has a rod shape (column shape) and its cross-section is usually circular in shape.

The housing 400 is usually grounded.

The sealing device 201 of the invention has a sealing part 210, a sleeve tube part 220 and a conduction part 230.

### <Sealing Part>

The sealing part 210 included in the sealing device 201 of the invention is now described.

The sealing part 210 includes an attaching portion 212, lip portions 214, a connecting portion 216, and a reinforcing ring 218.

The attaching portion 212 is annular in shape, extends in a direction parallel to the axis ω of the rotating shaft 300, and is attached to the inner surface 410 of the housing 400. The attaching portion 212 is sandwiched between the reinforcing ring 218 to be described later and the inner surface 410 of the housing 400, and is fixed so as to be closely attached to the inner surface 410 of the housing 400.

The lip portions 214 (214a, 214b) are slidably in contact with a fixing portion 222 of the sleeve tube part 220 to be described later.

However, the lip portions 214 (214a, 214b) may be slidably in contact with the outer surface 310 of the rotating shaft 300. That is, it is essential for the lip portions 214 to be slidably in contact with the outer surface 310 of the rotating shaft 300 and/or the fixing portion 222 of the sleeve tube part 220.

It is preferable for the lip portions 214 to slide on the fixing portion 222 of the sleeve tube part 220 because it is not necessary to subject the fixing portion 222 to plunge milling.

In the preferred embodiment shown in FIG. 11, the sealing part 210 has the two lip portions (a first lip portion 214a and a second lip portion 214b). However, it is essential for the preferred embodiment of the sealing device of the invention shown in FIG. 11 to have at least one lip portion.

In the preferred embodiment shown in FIG. 11, the first lip portion 214a in the sealing part 210 has a garter spring 219.

The connecting portion 216 connects the attaching portion 212 to the lip portions 214.

In the case of the sealing part 210 according to the preferred embodiment shown in FIG. 11, the connecting portion 216 is connected to the attaching portion 212 at its end in the direction parallel to the axis ω of the rotating shaft 300. The connecting portion extends in a direction perpendicular to the axis ω of the rotating shaft 300 and is connected to the lip portions 214.

The connecting portion 216 is attached to the reinforcing ring 218 at its portion extending in the direction perpendicular to the axis ω of the rotating shaft 300.

The attaching portion 212, the lip portions 214, and the connecting portion 216 as described above are all made of elastic bodies.

Exemplary materials of the elastic bodies include synthetic rubbers such as nitrile rubber (NBR), hydrogenated nitrile rubber (H-NBR), acrylic rubber (ACM) and fluoro rubber (FKM).

The reinforcing ring 218 is annular in shape. As shown in FIG. 11, the reinforcing ring preferably has an approximately L-shaped cross-section and includes a portion extending in the direction parallel to the axis ω of the rotating shaft 300, and a portion extending in the direction perpendicular to the axis ω.

The portion which extends in the direction parallel to the axis ω of the rotating shaft 300 is preferably fixed to the inner surface 410 of the housing 400 via the attaching portion 212. That is, the portion of the reinforcing ring 218 extending in the direction parallel to the axis ω of the rotating shaft 300 is closely attached to the inner surface of the attaching portion 212.

The portion of the reinforcing ring 218 extending in the direction perpendicular to the axis ω of the rotating shaft 300 is closely attached to the connecting portion 216.

The reinforcing ring 218 is preferably made of metal and more preferably stainless steel or cold rolled steel (SPCC).

The reinforcing ring 218 can be formed by press working or forging.

The attaching portion 212, the lip portions 214, the connecting portion 216, and the reinforcing ring 218 can be obtained by integral molding. For example, the reinforcing ring 218 (and further the garter spring 219 if necessary) is set within a mold, a non-cross-linked rubber material is charged thereinto, then a closed space within the mold is heated and pressurized to cross-link the rubber material, whereby the sealing part 210 in which the attaching portion 212, the lip portions 214, the connecting portion 216, and the reinforcing ring 218 are integrally molded can be obtained.

Such a sealing part 210 plays a role in suppressing penetration of foreign matter from outside and sealing the lubricant located inside.

### <Sleeve Tube Part>

The sleeve tube part 220 included in the sealing device 201 of the invention is now described.

The sleeve tube part 220 is an annular part which includes the fixing portion 222 fixed to the outer surface 310 of the rotating shaft 300 and extending in the direction parallel to the axis ω of the rotating shaft 300 and a support portion 224 connected to an end of the fixing portion 222 and extending in a direction approaching the inner surface 410 of the housing 400.

The fixing portion 222 and the support portion 224 are preferably approximately perpendicular to each other in a cross-section in a direction parallel to the axis ω of the rotating shaft 300 as shown in FIG. 11.

In the preferred embodiment shown in FIG. 11, the fixing portion 222 and the support portion 224 are approximately perpendicular to each other in the cross-section obtained by cutting along a plane containing the axis ω of the rotating shaft 300. Therefore, the sleeve tube part 220 in the preferred embodiment shown in FIG. 11 has an approximately L-shaped cross-section.

"Approximately perpendicular to each other" as used herein means that they are not completely perpendicular to each other. That is, the fixing portion 222 and the support portion 224 preferably form an angle of 90° therebetween but this angle may be 75° to 105°, (preferably 80° to 100°, and more preferably 85° to 95°).

The sleeve tube part 220 preferably has electrical conductivity.

In a case where a ring inner peripheral portion of the conduction part to be described later is not in contact with the outer surface 310 of the rotating shaft 300, the sleeve tube part 220 definitely has electrical conductivity.

On the other hand, in a case where the ring inner peripheral portion of the conduction part to be described later is in contact with the outer surface 310 of the rotating shaft 300, the sleeve tube part 220 may not necessarily have electrical conductivity.

The sleeve tube part 220 is preferably made of metal and more preferably metal having electrical conductivity. Examples of the metal include stainless steel, cold rolled steel (SPCC), brass, and aluminum.

The sleeve tube part 220 may not be made of metal. The sleeve tube part may be made of, for example, resin.

The sleeve tube part 220 can be formed by press working or forging.

### <Conduction Part>

The conduction part 230 included in the sealing devices 201 of the invention is now described.

The conduction part 230 has a ring shape, a ring outer peripheral portion 232 is in contact with the inner surface 410 of the housing 400, and its main surface 234 is fixed to the support portion 224 of the sleeve tube part 220.

Rotation of the rotating shaft 300 causes centrifugal force to be applied to the conduction part 230, whereby the ring outer peripheral portion 232 of the conduction part 230 is pressed against the inner surface 410 of the housing 400. As a result, the ring outer peripheral portion 232 of the conduction part 230 is closely attached to the inner surface 410 of the housing 400 in a stable manner to ensure conduction between the rotating shaft 300 and the housing 400.

In the conduction part 230 in the preferred example shown in FIG. 11, a ring inner peripheral portion 236 in the conduction part 230 is in contact with the outer surface 310 of the rotating shaft 300.

In the sealing device 201 of the invention, the ring inner peripheral portion 236 of the conduction part 230 is preferably in contact with the outer surface 310 of the rotating shaft 300 because this facilitates conduction between the rotating shaft 300 and the housing 400. In this case, even when the above-described sleeve tube part 220 does not have electrical conductivity, conduction between the rotating shaft 300 and the housing 400 is established.

The method of fixing the main surface 234 of the conduction part 230 to the support portion 224 of the sleeve tube part 220 is not particularly limited but they may be fixed together with, for example, an adhesive. However, it is preferred to fix them together not with an adhesive but with metallic bolts and nuts because conduction between the conduction part 230 and the sleeve tube part 220 is easily ensured, consequently leading to easy conduction between the rotating shaft 300 and the housing 400.

The conduction part 230 preferably has electrical conductivity and flexibility.

The conduction part 230 is preferably made of fabric, more preferably conductive woven fabric, and even more preferably conductive non-woven fabric.

Exemplary materials that can be illustrated for the conductive non-woven fabric or conductive woven fabric include copper, silver, iron, and carbon.

FIG. 12 is a schematic plan view of the conduction part 230 before being disposed in the gap 405 between the outer surface 310 of the rotating shaft 300 and the inner surface 410 of the housing 400. As shown in FIG. 12, the conduction part 230 preferably has a plurality of slits 238 at the ring outer peripheral portion 232.

It is preferable for the conduction part 230 to have the slits 238 at the ring outer peripheral portion 232 because when the rotating shaft 300 rotates to cause centrifugal force to be applied to the conduction part 230, the ring outer peripheral portion 232 of the conduction part 230 can be closely attached to the inner surface 410 of the housing 400 in a more stable manner even if the conduction part 230 is made of a less elastic material such as conductive non-woven fabric. As a result, conduction between the rotating shaft 300 and the housing 400 is ensured more stably.

In the case of the preferred example shown in FIG. 11, in the gap 405 between the outer surface 310 of the rotating shaft 300 and the inner surface 410 of the housing 400, the conduction part 230, the sleeve tube part 220, and the sealing part 210 are disposed in this order from outside toward inside.

This case exhibits the effect that conduction between the shaft and the housing can be kept in a space saving manner while having inside sealing properties.

This application claims priority based on Japanese Patent Application No. 2021-122141 filed on July 27, 2021 and priority based on Japanese Patent Application No. 2021-133882 filed on August 19, 2021, the entire disclosure of which is incorporated herein by reference.

### REFERENCE SIGNS LIST

2 electric motor (motor)
8a, 10a shaft (rotating shaft)
20 rotating shaft
20s outer surface of the rotating shaft
38 housing
38s inner surface of the housing
38b shaft hole
40, 60 sealing device
41, 61 cylindrical portion
42, 62 flange
43 annular portion
44, 64 sealing lip
45, 65 dust lip
50, 70 elastic ring
52, 72 rigid ring
107 gap
110 sleeve tube part
110a fixing portion of the sleeve tube part
110b support portion of the sleeve tube part
120 conduction part
120a ring outer peripheral portion of the conduction part
120b ring inner peripheral portion of the conduction part
120s main surface of the conduction part
201 sealing device of the invention
210 sealing part
212 attaching portion
214 lip portion
214a first lip portion
214b second lip portion
216 connecting portion
218 reinforcing ring
219 garter spring
220 sleeve tube part
222 fixing surface
224 support surface
230 conduction part
232 ring outer periphery
234 main surface
236 ring inner periphery
238 slit
300 rotating shaft
310 outer surface or the rotating shaft
400 housing
410 inner surface of the housing
ω axis of the rotating shaft

## Claims

1. A sealing device disposed in a gap between an outer surface of a rotating shaft and an inner surface constituting a shaft hole in a housing having the shaft hole in which the rotating shaft is to be inserted, and configured to seal the gap,
wherein rotation of the rotating shaft causes the sealing device to be pressed against the inner surface constituting the shaft hole in the housing and the sealing device is capable of conduction between the rotating shaft and the housing.

2. The sealing device according to claim 1, comprising:
an annular sleeve tube part fixed to the outer surface of the rotating shaft; and
a conduction part having a ring shape, a ring outer peripheral portion being in contact with the inner surface of the housing, and its main surface being fixed to the sleeve tube part.

3. The sealing device according to claim 2, wherein centrifugal force generated by the rotation of the rotating shaft causes force with which the conduction part is pressed against the inner surface of the housing to be increased.

4. The sealing device according to claim 1, comprising:
a cylindrical portion into which the rotating shaft is to be fitted;
a flange extending radially outward from the cylindrical portion; and
at least one lip extending further radially outward from the flange to be slidably in contact with an inner peripheral surface of the shaft hole of the housing,
wherein the cylindrical portion and the flange are made of at least one of metal and conductive rubber, and the lip is made of conductive rubber.

5. The sealing device according to claim 1, comprising:
an annular sleeve tube part which has a fixing portion fixed to the outer surface of the rotating shaft and extending in a direction of an axis of the rotating shaft and a support portion connected to an end of the fixing portion and extending in a direction approaching the inner surface of the housing;
a conduction part having a ring shape, a ring outer peripheral portion being in contact with the inner surface of the housing, and its main surface being fixed to the support portion of the sleeve tube part; and
a sealing part comprising: an annular attaching portion attached to the inner surface of the housing and made of an elastic body; a lip portion being slidably in contact with the outer surface of the rotating shaft and/or the fixing portion of the sleeve tube part and made of an elastic body; a connecting portion connecting the attaching portion and the lip portion to each other and made of an elastic body; and a reinforcing ring closely attached to an inner surface of the attaching portion and also closely attached to the connecting portion, the sealing part being configured to seal a lubricant located inside while suppressing penetration of foreign matter from outside.

6. The sealing device according to claim 5, wherein a ring inner peripheral portion of the conduction part is in contact with the outer surface of the rotating shaft.

7. The sealing device according to claim 5 or 6, wherein the conduction part is made of conductive non-woven fabric.

8. The sealing device according to any one of claims 5 to 7, wherein in the gap between the outer surface of the rotating shaft and the inner surface of the housing, the conduction part, the sleeve tube part and the sealing part are disposed in this order from outside toward inside in the direction of the axis of the rotating shaft.

9. The sealing device according to any one of claims 5 to 8, wherein the conduction part has a plurality of slits at the ring outer peripheral portion.

10. The sealing device according to any one of claims 5 to 9, wherein the fixing portion and the support portion in the sleeve tube part are approximately perpendicular to each other in a cross-section in a direction parallel to the axis of the rotating shaft.
